# EUROPEAN PATENT SPECIFICATION

(11) **EP 2 062 723 B1**
(45) Date of publication and mention of the grant of the patent: **25.05.2011**
(21) Application number: 08169932.4
(22) Date of filing: 25.11.2008
(51) Int. Cl.: B29D 30/32, B29D 30/24

(54) **Tyre building drum**
Trommel zur Reifenerzeugung
Tambour servant à fabriquer des pneus

(30) Priority: 26.11.2007 IT TO20070848
(43) Date of publication of application: 27.05.2009
(73) Proprietor: Marangoni Meccanica S.P.A., 38068 Rovereto (IT)
(72) Inventor: Baldoni, Viscardo, 38068 Rovereto (IT); Marangoni, Giorgio, 38068 Rovereto (IT)
(74) Representative: Jorio, Paolo

(56) References cited:
- EP-A- 0 468 718
- EP-A- 0 511 818
- EP-A- 1 145 834
- DE-A1- 19 939 986
- DE-B- 1 240 267
- US-A- 5 660 677
- US-A1- 2001 054 485

## Description

The present invention relates to a tyre building drum.

Vehicle tyres, i.e. comprising a carcass with two bead bundles, are normally produced using a building drum comprising two coaxial half-drums moved in opposite directions along a common longitudinal axis by a central actuating device.

Each half-drum comprises an expandible bead clamping device normally defined by a ring of sectors, which are moved by a normally pneumatic actuating device in a substantially radial direction with respect to the common longitudinal axis, and to and from an expanded lock position clamping a respective bead bundle in a given axial position along the half-drum and radially outwards of the carcass, initially laid flat on the building drum, of the tyre being built.

Each half-drum also comprises at least one turn-up bladder which, at rest, lies flat on the half-drum, axially outwards of the relative bead clamping device, and is inflated to turn a lateral portion of a body ply of the tyre up, around, and outwards of the relative bead bundle.

As for the actuating device of the expandible bead clamping device sectors, and as disclosed in DE 199 39 986 A1 and EP-A-0468718, each sector is connected to the outer end of a respective radial rod mounted to slide along a respective radial runner and having an inner end defined by a tappet, which engages the truncated-cone-shaped outer surface of an annular push wedge coaxial with the relative half-drum. The push wedge forms part of an annular piston coaxial with the relative half-drum and movable pneumatically along the half-drum from a withdrawn position, in which the tappets contact the truncated-cone-shaped surface of the annular wedge at respective points close to the narrow end of the truncated-cone-shaped surface, to a forward position, in which the tappets contact the truncated-cone-shaped surface of the annular wedge at respective points close to the wide end of the truncated-cone-shaped surface. The annular wedge is normally returned to the withdrawn position by axial springs acting axially on the piston, and the tappets are held contacting the truncated-cone-shaped surface of the annular wedge by radial return springs.

Building drums of the above type have several drawbacks which, in the case of the sector actuating device, are mainly due to the sector rod return springs, which do not always restore the sectors accurately to the withdrawn position at the end of each operating cycle, so relatively painstaking, time-consuming manual labour is required before the next cycle can be started.

Another tire building drum that comprises a bead clamping device is disclosed in US 2001/0054485 11.

It is an object of the present invention to provide a building drum designed to eliminate the above drawbacks.

According to the present invention, there is provided a tyre building drum, as claimed in Claim 1 and, preferably, in any one of the following Claims depending directly or indirectly on Claim 1.

A non-limiting embodiment of the present invention will be described by way of example with reference to the accompanying drawings, in which:
Figure 1 shows a partial axial section of a preferred embodiment of the building drum according to the present invention;
Figure 2 shows an enlarged detail of Figure 1;
Figure 3 shows the Figure 2 detail in a different operating configuration.

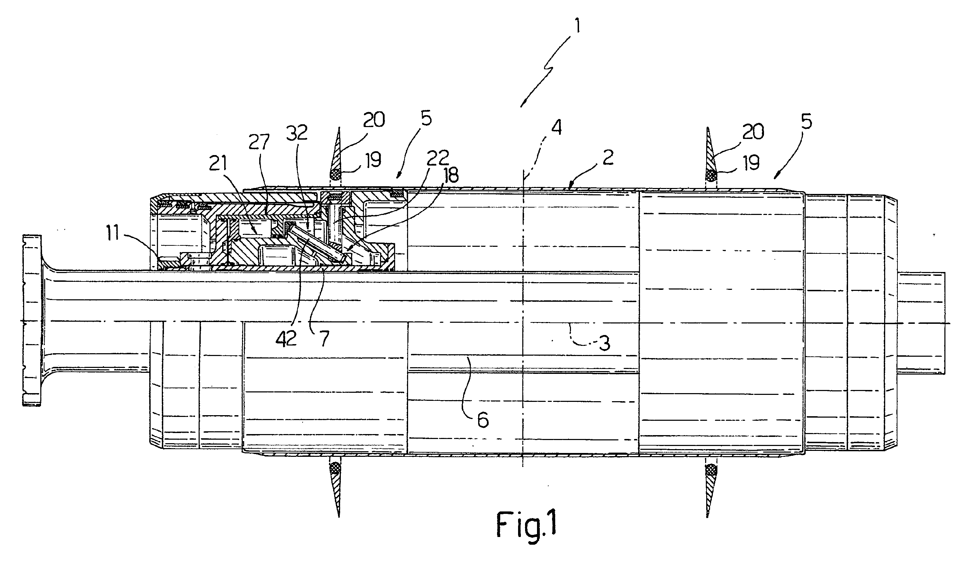

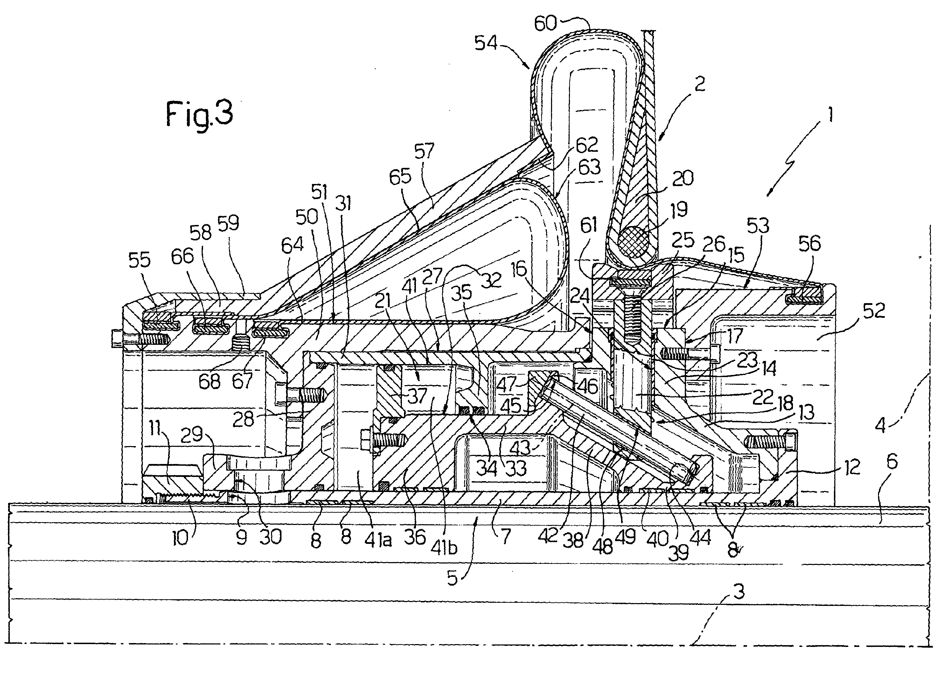

Number 1 in Figure 1 indicates as a whole a drum for forming a carcass 2 (Figure 3) of a vehicle tyre (not shown).

Drum 1 has a longitudinal axis 3 and a central plane 4 perpendicular to longitudinal axis 3, and comprises two half-drums 5 which are positioned specularly with respect to central plane 4, are coaxial with longitudinal axis 3, and are movable axially in opposite directions, along a central shaft 6 coaxial with longitudinal axis 3, to and from central plane 4 by a known powered screw-nut screw transmission not shown.

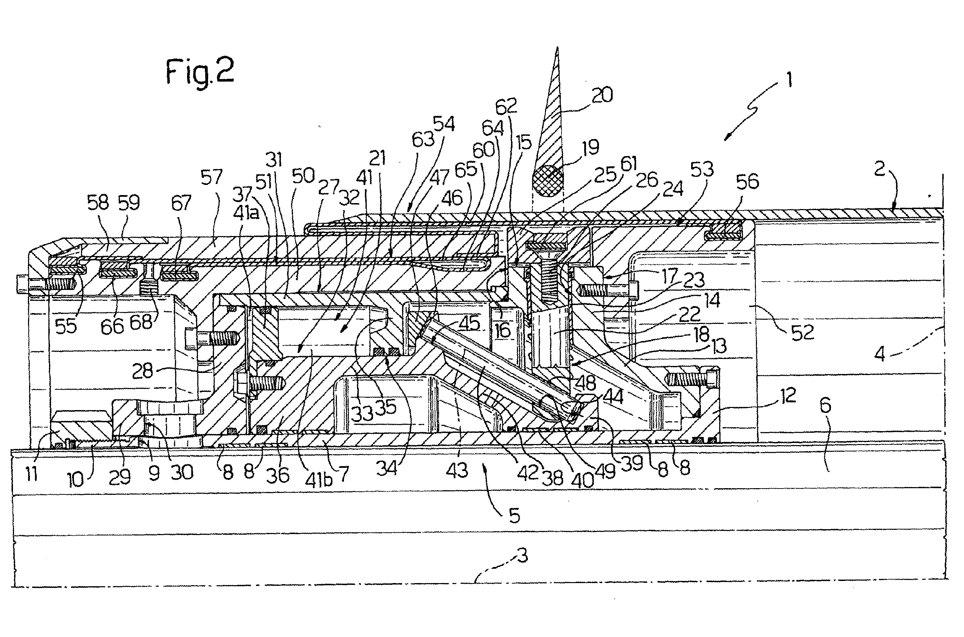

As shown more clearly in Figures 2 and 3, each half-drum 5 comprises an inner tubular body 7 fitted in axially sliding manner to central shaft 6 by the interposition of bushings 8, and having, close to its axially outer end, i.e. the opposite end to that facing central plane 4, a radial through hole 9 engaged by an output pin (not shown) of the screw-nut screw transmission (not shown) to move half-drum 5 along longitudinal axis 3, and prevent half-drum 5 from rotating about longitudinal axis 3 with respect to central shaft 6.

At its axially outer end, inner tubular body 7 comprises a threaded end portion 10 for assembling a ring nut 11. At its axially inner end, i.e. facing central plane 4, inner tubular body 7 is connected rigidly to an annular flange 12, the radially outer periphery of which is connected integrally to the narrow end of a substantially truncated-cone-shaped can 13 coaxial with longitudinal axis 3 and facing threaded end portion 10. The wide end of can 13 is connected integrally to an annular body 14 bounded externally by a cylindrical surface 15 coaxial with longitudinal axis 3, and by two annular surfaces 16 and 17 perpendicular to longitudinal axis 3.

Annular body 14 supports a respective expandible clamping device 18 for clamping a respective bead bundle 19 with a respective annular bead filler 20 to half-drum 5, and which is activated by a respective actuating device 21.

Clamping device 18 comprises a ring of cylindrical rods 22, each of which slides, with the interposition of a respective bushing 23, inside a respective radial hole 24 formed through annular body 14. For each rod 22, clamping device 18 comprises a grooved sector 25 connected integrally by a respective screw 26 to the end of rod 22 projecting radially outwards of annular body 14. Each sector 25 houses a respective portion of bead bundle 19, and lies in a plane common to all of sectors 25 and perpendicular to longitudinal axis 3.

Actuating device 21 comprises an annular, double-acting pneumatic cylinder 27 bounded inwards by inner tubular body 7, axially inwards by annular flange 12 and can 13, and axially outwards by a radially outer annular flange 28 of a sleeve 29 fitted in fluidtight manner to central shaft 6 and having a radial hole 30 coaxial with radial hole 9 of inner tubular body 7. Pneumatic cylinder 27 is also bounded radially outwards by an outer tubular body 31, which is fitted at one end to a tubular appendix projecting axially from annular surface 16 of annular body 14, and at the other end to the outer periphery of annular flange 28. Sleeve 29 and outer tubular body 31 are gripped to annular body 14 by ring nut 11.

Actuating device 21 also comprises an annular piston 32 in turn comprising an intermediate tubular body 33 movable in fluidtight manner through a hole 34 coaxial with longitudinal axis 3 and defined by an annular flange 35 projecting radially inwards from an intermediate portion of the inner surface of outer tubular body 31. At its end facing ring nut 11, intermediate tubular body 33 is fitted in sliding and fluidtight manner to inner tubular body 7 by an inner annular flange 36, and to outer tubular body 31 by an outer annular flange 37. At its opposite end to that facing ring nut 11, intermediate tubular body 33 is connected integrally to the wide end of a truncated-cone-shaped can 38 fitted on its narrow end with a ring 39 mounted to slide along inner tubular body 7 by the interposition of a bushing 40.

As shown more clearly in Figure 3, annular flanges 28 and 35 define, outwards of tubular body 7 and together with piston 32, an annular chamber 41 divided by annular flange 37 into two annular chambers 41a and 41b, each of which is fed selectively with compressed air by circuits not shown, to move piston 32 back and forth along longitudinal axis 3.

As shown more clearly in Figures 2 and 3, piston 32 is fitted with rods 42 equal in number to rods 22 and, like rods 22, equally spaced about longitudinal axis 3. Each rod 42 defines an individual positive-guide and control member for a respective rod 22, and has an axis 43 defined by the intersection of a relative plane through longitudinal axis 3, and a truncated cone common to all of axes 43, coaxial with longitudinal axis 3, parallel to and outwards of the truncated cone formed by can 38, and having a 10° to 40° flare. A first end of each rod 42 is housed inside a respective dead hole 44 formed in ring 39, and a second end of each rod 42 extends through a respective through hole 45 formed in an outer end ring 46 of can 38, and axially engages a thrust bearing 47 locking rod 42 axially to can 38.

Each rod 42 is cylindrical, is smaller in diameter than relative rod 22, and engages in sliding manner, by the interposition of a bushing 48, a sloping hole 49 formed through relative rod 22, to lock relative rod 22 and relative sector 25 angularly with respect to annular body 14, and at the same time move relative rod 22 axially (i.e. radially with respect to longitudinal axis 3), in response to axial displacement of piston 32, between a withdrawn position (Figure 2) in which relative sector 25 contacts cylindrical surface 15 of annular body 14, and an extracted or expanded work position (Figure 3) in which relative sector 25 engages relative bead bundle 19 with carcass 2 in between.

As shown more clearly in Figure 2, the structure of half-drum 5 is completed by a tubular body 50 fitted integrally to outer tubular body 31 and having a substantially cylindrical outer surface 51 coaxial with longitudinal axis 3 and of substantially the same diameter as cylindrical surface 15 of annular body 14; and by a tubular body 52 located on the opposite side of annular body 14 to tubular body 50, coaxial with longitudinal axis 3, and having a substantially cylindrical outer surface 53 of substantially the same diameter as the ring defined by sectors 25 when sectors 25 are in the withdrawn position.

As shown more clearly in Figures 2 and 3, each half-drum 5 supports a respective turn-up bladder 54 which, in the rest position shown in Figure 2, covers cylindrical outer surfaces 51 and 53 and the outer surface of sectors 25 substantially completely, and is connected to relative half-drum 5 by an axially outer shoe 55 fitted inside a relative annular groove formed through cylindrical outer surface 51 of relative tubular body 50, adjacent to the axially outer free end of tubular body 50, and by an axially inner shoe 56 fitted inside a relative annular groove formed through the cylindrical outer surface 53 of relative tubular body 52, adjacent to the axially inner end of tubular body 52.

Starting from outer shoe 55, turn-up bladder 54 comprises an axially outer portion extending from axially outer shoe 55 to clamping device 18 and defined by an axially reinforced tubular membrane 57 having a tubular axially outer end portion 58 locked onto tubular body 50 by a substantially rigid tubular outer sleeve 59; and an inner portion extending axially outwards from axially inner shoe 56 and defined by an elastic sleeve 60, which has an axially intermediate shoe 61 fitted inside an annular seat formed in the outer surface of sectors 25, and a collar 62 defining an outer end of sleeve 60 and sealed fluidtight to the axially inner end of tubular membrane 57.

As shown in Figure 2, at rest, sleeve 60 lies flat on cylindrical outer surface 53 and the outer surface of sectors 25, and is folded into a U on the outer surface of tubular membrane 57.

To ensure each tubular membrane 57 is deformed cone-shaped and remains coaxial with longitudinal axis 3, each half-drum 5 has a respective push bladder 63 which, when expanded (Figure 3), has a cross section substantially in the shape of an isosceles triangle with a vertex facing axially outwards, a radially inner side 64 contacting outer surface 51 of relative tubular body 50, and a radially outer side 65 covered by tubular membrane 57. Push bladder 63 is connected to relative tubular body 50 by two fastening shoes 66, 67 connected to the axially outer ends of respective sides 65, 64, and housed inside respective annular grooves formed in relative tubular body 50, on opposite sides of a relative fill conduit 68.

Operation of drum 1 will be clear from the above description, with no further explanation required.

As regards drum 1 itself, however, it should be pointed out that:
- because of rods 42, each sector 25 is guided positively, with no help from springs, and perfectly accurately, both when moving forward from the withdrawn to the extracted position, and back from the extracted to the withdrawn position;
- by straddling sectors 25, sleeve 60 performs the dual function of preventing compressed-air leakage from the chamber defined when toroidally shaping the central portion of carcass 2 between the two bead bundles 19, and of ensuring the inflating turn-up bladder 54 remains in as close contact as possible with the relative sidewall of carcass 2;

- intermediate shoe 61 connecting sectors 25 to sleeve 60 ensures detachment of sleeve 60 from carcass 2 when sectors 25 move back into the withdrawn position;
- radial expansion of collar 62, produced solely by cone-shaped deformation of tubular membrane 57, with no external axial loads applied, moves the whole of turn-up bladder 54 outwards onto the relative sidewall of carcass 2;
- this movement causes a portion of elastic sleeve 60 of turn-up bladder 54 to roll gradually, with no slide, along the relative sidewall of carcass 2, and so turn the relative annular lateral portion of carcass 2 gradually up onto the relative sidewall of carcass 2.

## Claims

1. A tyre building drum, wherein two coaxial half-drums (5) move in opposite directions along a common axis (3), and each half-drum (5) comprises an expandible bead clamping device (18) in turn comprising a ring of sectors (25), each with a radial rod (22), and an actuating device (21) for moving the sectors (25) and the relative radial rods (22) substantially radially with respect to the common axis (3) and to and from an expanded position clamping a respective bead bundle (19) in a given axial position along the relative half-drum (5) ; wherein the actuating device (21) comprises, in combination, a powered body (32) movable back and forth along the common axis (3); and a number of individual guide members (42), each integral with the powered body (32) and coupled positively and in a slidable manner to a respective radial rod (22) to move the respective sector (25) to and from the expanded position in response to axial displacements of the powered body (32) along the common axis (3).

2. A drum as claimed in Claim 1, wherein each radial rod (22) is a cylindrical radial rod (22); each half-drum (5) comprising an annular body (14) which is coaxial with the common axis (3), is movable with the half-drum (5), and has a number of through radial holes (24) equally spaced about the common axis (3); and each radial hole (24) being engaged in sliding manner by a respective said radial rod (22).

3. A drum as claimed in Claim 1 or 2, wherein each individual guide member (42) is connected to the respective radial rod (22) to lock the radial rod (22) angularly in a given angular position with respect to the respective half-drum (5).

4. A drum as claimed in one of the foregoing Claims, wherein each individual guide member (42) comprises an inclined rod (42) sloping with respect to the common axis (3) and having an inclined axis (43) defined by the intersection of a respective plane through the common axis (3), and a truncated cone common to all the inclined axes (43) of the respective half-drum (5) and coaxial with the common axis (3).

5. A drum as claimed in Claim 4, wherein the truncated cone has a flare ranging between 10° and 40°

6. A drum as claimed in Claim 4 or 5, wherein each radial rod (22) has a through transverse hole (49) parallel to the respective inclined rod (42) and engaged in sliding manner by the inclined rod (42).

7. A drum as claimed in one of Claims 4 to 6, wherein each inclined rod (42) is a cylindrical rod.

8. A drum as claimed in one of the foregoing Claims, wherein the powered body (32) is a piston (32) of a double-acting, fluid-pressure cylinder (27).

9. A drum as claimed in Claim 8, wherein the piston (32) is an annular piston coaxial with the common axis (3).

10. A drum as claimed in one of the foregoing Claims, and comprising, for each half-drum (5), a turn-up bladder (54) which lies flat, at rest, on the half-drum (5), and has an axially outer first shoe (55) and an axially inner second shoe (56) connecting it to the half-drum (5); the first and second shoe (55, 56) being located on opposite sides of the bead clamping device (18); and the turn-up bladder (54) being located radially outwards of the ring of sectors (25).

11. A drum as claimed in Claim 10, wherein the turn-up bladder (54) has an intermediate shoe (61) connected to the sectors (25).

## Patentansprüche

1. Trommel zur Reifenherstellung, wobei zwei koaxiale Halbtrommeln (5) sich in entgegengesetzte Richtungen entlang einer gemeinsamen Achse (3) bewegen, und jede Halbtrommel (5) eine ausdehnbare Wulsteinspannvorrichtung (18) umfasst, die ihrerseits einen Ring mit Sektoren (25) jeweils mit einer radialen Stange (22) und einer Betätigungsvorrichtung (21) zum Bewegen der Sektoren (25) und der jeweiligen radialen Stangen (22) im Wesentlichen radial in Bezug auf die gemeinsame Achse und zu und von einer ausgedehnten Position, die einen jeweiligen Wulstkern (19) in einer gegebenen axialen Position entlang der jeweiligen Halbtrommel (5) einspannt, umfasst; wobei die Betätigungsvorrichtung (21) in Kombination einen angetriebenen Körper (32), der entlang der gemeinsamen Achse (3) vor und zurück bewegbar ist; und eine Anzahl einzelner Führungsglieder (42) umfasst, die jeweils integral mit dem angetriebenen Körper (32) sind und formschlüssig und in einer verschiebbaren Weise mit einer jeweiligen radialen Stange (22) gekoppelt sind, um den jeweiligen Sektor (25) ansprechend auf axiale Verschiebungen des angetriebenen Körpers (32) entlang der gemeinsamen Achse (3) in die und aus der ausgedehnten Position zu bewegen.

2. Trommel nach Anspruch 1, wobei jede radiale Stange (22) eine zylindrische radiale Stange (22) ist; jede Halbtrommel (5) einen ringförmigen Körper (14) umfasst, der koaxial mit der gemeinsamen Achse (3) ist, mit der Halbtrommel (5) beweglich ist und eine Anzahl radialer Durchgangslöcher (24) hat, die gleichmäßig um die gemeinsame Achse (3) beabstandet sind; und wobei in jedes radiale Loch (24) durch eine jeweilige radiale Stange (22) in verschiebbarer Weise eingegriffen wird.

3. Trommel nach Anspruch 1 oder 2, wobei jedes einzelne Führungsglied (42) mit der jeweiligen radialen Stange (22) verbunden ist, um die radiale Stange (22) winkelig in einer gegebenen Winkelposition in Bezug auf die jeweilige Halbtrommel (5) zu arretieren.

4. Trommel nach einem der vorhergehenden Ansprüche, wobei jedes einzelne Führungsglied (42) eine geneigte Stange (42) umfasst, die sich in Bezug auf die gemeinsame Achse (3) neigt und eine geneigte Achse (43) hat, die durch den Schnitt einer jeweiligen Ebene durch die gemeinsame Achse (3) und einen Kegelstupf, der allen geneigten Achsen (43) der jeweiligen Halbtrommel (5) gemeinsam und koaxial mit der gemeinsamen Achse (3) ist, definiert ist.

5. Trommel nach Anspruch 4, wobei der Kegelstumpf eine Aufweitung im Bereich zwischen 10° und 40° hat.

6. Trommel nach Anspruch 4 oder 5, wobei jede radiale Stange (22) ein Querdurchgangsloch (49) parallel zu der jeweiligen geneigten Stange (42) hat, in das von der geneigten Stange (42) in verschiebbarer Weise gegriffen wird.

7. Trommel nach einem der Ansprüche 4 bis 6, wobei jede geneigte Stange (42) eine zylindrische Stange ist.

8. Trommel nach einem der vorhergehenden Ansprüche, wobei der angetriebene Körper (32) ein Kolben (32) eines doppeltwirkenden Fluiddruckzylinders (27) ist.

9. Trommel nach Anspruch 8, wobei der Kolben (32) ein ringförmiger Kolben ist, der koaxial mit der gemeinsamen Achse (3) ist.

10. Trommel nach einem der vorhergehenden Ansprüche, die für jede Halbtrommel (5) einen Umlegebalg (54) umfasst, der in Ruhe auf der Halbtrommel (5) flachliegt und einen axial äußeren ersten Aufspannkörper (55) und einen axial inneren Aufspannkörper (56) hat, die ihn mit der Halbtrommel (5) verbinden; wobei der erste und der zweite Aufspannkörper (55, 56) auf entgegengesetzten Seiten der Wulsteinspannvorrichtung (18) angeordnet sind; und der Umlegebalg (54) radial auswärts von dem Ring aus Sektoren (25) angeordnet ist.

11. Trommel nach Anspruch 19, wobei der Umlegebalg (54) einen mit den Sektoren (25) verbundenen Zwischenaufspannkörper (61) hat.

## Revendications

1. Tambour servant à fabriquer des pneumatiques, dans lequel deux demi-tambours coaxiaux (5) se déplacent dans des directions opposées le long d'un axe commun (3), et dans lequel chaque demi-tambour (5) comprend un dispositif de serrage de talon pouvant de déployer (18) qui comprend à son tour un anneau de secteurs (25), chacun d'eux comprenant une tige radiale (22), et un dispositif d'actionnement (21) destiné à déplacer les secteurs (25) et les tiges radiales relatives (22) sensiblement de manière radiale par rapport à l'axe commun (3) et vers une, et à partir d'une, position déployée en serrant une tringle respective (19) dans une position axiale donnée le long du demi-tambour relatif (5) ; dans lequel le dispositif d'actionnement (21) comprend, en association, un corps actionné (32) qui peut se déplacer dans un mouvement de va-et-vient le long de l'axe commun (3) ; et un certain nombre d'éléments de guidage individuels (42), chacun d'eux étant d'une pièce avec le corps actionné (32) et accouplé franchement et d'une façon coulissante à une tige radiale respective (22) de façon à déplacer le secteur respectif (25) vers, et à partir de, la position déployée en réponse aux déplacements axiaux du corps actionné (32) le long de l'axe commun (3).

2. Tambour selon la revendication 1, dans lequel chaque tige radiale (22) est une tige radiale cylindrique (22) ; chaque demi-tambour (5) comprenant un corps annulaire (14) qui est coaxial avec l'axe commun (3), peut se déplacer avec le demi-tambour (5), et présente un certain nombre de trous radiaux traversants (24) équidistants autour de l'axe commun (3) ; et chaque trou radial (24) étant mis en prise de manière coulissante par une dite tige radiale respective (22).

3. Tambour selon la revendication 1 ou la revendication 2, dans lequel chaque élément de guidage individuel (42) est connecté à la tige radiale respective (22) de façon à verrouiller la tige radiale (22) de manière angulaire dans une position angulaire donnée par rapport au demi-tambour respectif (5).

4. Tambour selon l'une quelconque des revendications précédentes, dans lequel chaque élément de guidage individuel (42) comprend une tige inclinée (42) qui est en pente par rapport à l'axe commun (3) et qui présente un axe incliné (43) défini par l'intersection d'un plan respectif qui passe par l'axe commun (3), et d'un cône tronqué commun à tous les axes inclinés (43) du demi-tambour respectif (5) et coaxial avec l'axe commun (3).

5. Tambour selon la revendication 4, dans lequel le cône tronqué présente un évasement qui est compris entre 10° et 40°

6. Tambour selon la revendication 4 ou la revendication 5, dans lequel chaque tige radiale (22) présente un trou transversal traversant (49) parallèle à la tige inclinée respective (42) et mis en prise de manière coulissante par la tige inclinée (42).

7. Tambour selon l'une quelconque des revendications 4 à 6, dans lequel chaque tige inclinée (42) est une tige cylindrique.

8. Tambour selon l'une quelconque des revendications précédentes, dans lequel le corps actionné (32) est un piston (32) d'un cylindre à pression de fluide à double effet (27).

9. Tambour selon la revendication 8, dans lequel le piston (32) est un piston annulaire coaxial avec l'axe commun (3).

10. Tambour selon l'une quelconque des revendications précédentes, et comprenant, pour chaque demi-tambour (5), une vessie de retournement (54) qui se trouve à plat, au repos, sur le demi-tambour (5), et présente une première semelle extérieure de manière axiale (55) et une seconde semelle intérieure de manière axiale (56) qui la connectent au demi-tambour (5); les première et seconde semelles (55, 56) étant situées sur des côtés opposés du dispositif de serrage de talon (18) ; et la vessie de retournement (54) étant située de manière radiale vers l'extérieur de l'anneau de secteurs (25),

11. Tambour selon la revendication 10, dans lequel la vessie de retournement (54) présente une semelle intermédiaire (61) connectée aux secteurs (25).
